# EUROPÄISCHE PATENTSCHRIFT

(11) **EP 2 883 692 B1**
(45) Veröffentlichungstag und Bekanntmachung des Hinweises auf die Patenterteilung: **17.08.2022**
(21) Anmeldenummer: 14197506.0
(22) Anmeldetag: 11.12.2014
(51) Int. Cl.: B32B 15/08, C21D 8/12, H01F 1/18, H02K 1/04, H02K 15/12

(54) **Vorrichtung und Verfahren zum Verbinden von Blechteilen zu einem Blechpaket**
Device and method for connecting sheet metal to a sheet package
Dispositif et procédé de liaison de pièces en tôle et d'un paquet de tôles

(30) Priorität: 11.12.2013 WO PCT/AT2013/050246
(43) Veröffentlichungstag der Anmeldung: 17.06.2015
(73) Patentinhaber: voestalpine Automotive Components Dettingen GmbH & Co. KG, 72581 Dettingen an der Erms (DE)
(72) Erfinder: Kauffmann, Jochen, 73061 Ebersbach (DE); Lanksweirt, Jochen, 89522 Heidenheim (DE); Fluch, Ronald, 4020 Linz (AT); Bursy, Heinrich, 73268 Erkenbrechtsweiler (DE)
(74) Vertreter: Jell, Friedrich

(56) Entgegenhaltungen:
- EP-A1- 2 450 189
- WO-A1-2014/089593

## Beschreibung

Die Erfindung betrifft ein Verfahren zum Verbinden von Blechteilen zu einem Blechpaket, bei dem Blechteile von einem Blechband, insbesondere Elektroband, mit einer wenigstens bereichsweisen, aushärtbaren, polymeren Klebstoffschicht, insbesondere Backlack, mithilfe einer Abtrenneinrichtung abgetrennt werden, welche abgetrennten Blechteile in einer Paketbremse übereinander vorgesehen zu mehreren Blechpaketen zumindest stoffschlüssig verbunden werden, wobei auf die Klebstoffschicht des Blechbands ein Trennmittel bereichsweise derart aufgebracht wird, dass nach dem Abtrennen eines damit trennbeschichteten Blechteils, dieses Blechteil die Trennung der Blechpakete erleichtert.

Um Blechpakete leichter voneinander trennen zu können, ist es aus dem Stand der Technik bekannt (WO2012/059588A1 oder EP2450189A1), ein klebstoffbeschichtetes Blechband in einer Abtrenneinrichtung mit mehreren Schneidwerkzeugen bereichsweise mit einer Trennbeschichtung zu beschichten, wodurch die klebende Eigenschaft mindestens eines davon abgetrennten bzw. ausgeschnittenen oder abgeschnittenen Blechteils vermindert bis aufgehoben wird. Auf diese Weise wird ein Zusammenkleben von in einer Paketbremse zusammengedrückten Blechpaketen erschwert. Aufwendig gestaltet sich beim Trennbeschichten des Blechbands der erforderliche positionsgenaue Auftrag des Trennmittels, um nachteilige Effekte auf gewünschte Klebeverbindung und damit auch auf die Festigkeit des Blechpakets zu vermeiden. Zudem können durch das Trennmittel eventuelle Verunreinigungen in der Abtrenneinrichtung gebunden werden und damit die Reproduzierbarkeit des Verfahrens vermindern. Außerdem stellt ein exaktes Breitenmaß der Blechpakete oftmals eine notwendige Voraussetzung für elektrischen Maschinen dar, um beispielsweise Luftspaltmaße oder Ausnehmungen für Permanentmagnete einhalten zu können. Mit einem stirnseitig anhaftenden Trennmittel können solche Bauteilmaße nicht zuverlässig gewährleistet werden.

Die Erfindung hat sich daher die Aufgabe gestellt, ausgehend vom eingangs geschilderten Stand der Technik ein einfach handzuhabendes Verfahren zu schaffen, mit dem reproduzierbar Blechteile zu formgenauen, mechanisch festen und dennoch leicht voneinander trennbaren Blechpaketen verbunden werden können.

Die Erfindung löst die gestellte Aufgabe durch die Merkmale des Anspruchs 1.

Wird das Trennmittel auf die Klebstoffschicht des Blechbands vor der Abtrenneinrichtung aufgebracht, so kann sich das Verfahren zunächst durch verbesserte Einfachheit auszeichnen. Das Trennmittel wird nämlich auf das Blechband aufgebracht, bevor Trennschritte der Abtrenneinrichtung erfolgen, um damit das Blechband schrittweise auf das Endabtrennen eines Blechteils vorzubereiten. Daher sind zum Zeitpunkt der Trennbeschichtung die Konturen bzw. die wesentlichen Konturen des abzutrennenden Blechteils noch nicht am Blechband vorgesehen - womit ein konturfolgendes Aufbringen der Trennschicht auf das Blechpaket unterbleiben kann. Toleranzen beim nachfolgenden Bearbeiten des Blechbands spielen für das Trennbeschichten somit hierbei keine Rolle - sodass das Verfahren besonders reproduzierbar wird. Außerdem kann das vor der Abtrenneinrichtung auf das Blechband aufgebrachte Trennmittel eventuelle Verunreinigungen in der Abtrenneinrichtung binden, und zwar bevorzugt an jene Schneidreste, die vor dem Endabtrennen des Blechteils vom Blechband abgetrennt werden. Die Abtrenneinrichtung kann damit frei von Verunreinigungen gehalten werden, was reproduzierbar formgenaue und mechanisch feste Blechpakete sicherstellen kann. Zudem kann mit einem Aufbringen von Trennmittel vor der Abtrenneinrichtung erfindungsgemäß ein unerwünschtes stirnseitiges Aufbringen von Trennmittel am abzutrennenden Blechteil vermieden werden, was eine Verbreiterung der Blechpakete bzw. Elektroblechpakete vermeidet. Somit können formgenaue Bauteile sichergestellt werden - was etwa Bedeutung bei elektrischen Maschinen hat, um beispielsweise Windgeräusche zu vermeiden, exakte Ausnehmungen für Permanentmagneten zu ermöglichen bzw. geringe Luftspalte für hohe elektrische Leistungsdichten zu gewährleisten. Im Gegensatz zum Stand der Technik kann daher das erfindungsgemäße Verfahren nicht nur ein einfaches Trennen der, die Paketbremse verlassenden Blechpakete ermöglichen - es kann erfindungsgemäß auch sicherstellen, dass die stets formgenauen und mechanisch festen Blechpakete, insbesondere Elektroblechpakete, für elektrische Maschinen bzw. elektrische bzw. elektromagnetische Anwendungen besonders geeignet sind.

Im Allgemeinen wird festgehalten, dass die Abtrenneinrichtung ein oder mehrere Werkzeuge aufweisen kann, mit dem das Blechband bearbeitet wird. So kann ein Werkzeug ein oder mehrere Schneiden zum Aus- oder Abschneiden vom bzw. des Blechbands aufweisen, um damit das Blechteil für das Blechpaket auszubilden. Auch ist vorstellbar, dass der Abtrenneinrichtung ein Drücker als Werkzeug zugehört, um beim Endabtrennen ein ausgeschnittenes Blechteil aus dem Blechband herauszulösen bzw. das Blechband diesbezüglich zu zerlegen.

Wird auf beiden Seiten des Blechbands je ein Trennmittel direkt gegenüberliegend aufgebracht, kann ein beidseitig trennbeschichtetes Blechteil geschaffen werden, das als Abstandshalter zwischen Blechpaketen sowie ein erleichtertes Trennen der Blechpakete gewährleistet. Zudem können damit die Blechpakete frei von einer Trennbeschichtung erzeugt werden, was die Reproduzierbarkeit des Verfahrens weiter erhöhen kann.

Wird auf beiden Seiten des Blechbands abwechselnd je ein Trennmittel aufgebracht, kann damit am ersten und letzten Blechteil eines Blechpakets eine Trennbeschichtung erzeugt werden. Dies kann unter anderem die Bedingungen zum eventuellen Entfernen der Trennbeschichtung erleichtern, wobei vorstellbar ist, dass diese endseitigen Trennbeschichtungen am Blechpaket verbleiben und zu einem funktionellen Mehrwert des Blechpakets führen.

Die technische Wirkung des Trennmittels kann verstärkt werden, wenn die Trennbeschichtung derart aufgebracht wird, dass die Trennbeschichtung nach dem Endabtrennen des Blechteils die Klebstoffschicht vollflächig abdeckt. Ein Aneinanderhaften der Blechpakete ist so auch bei erhöhten Drücken in der Paketbremse wirkungsvoll vermeidbar, was sich positiv auf die Reproduzierbarkeit des Verfahrens auswirken kann.

Wird als Trennmittel eine Trennfolie auflaminiert, kann das Verfahren in der Handhabung weiter vereinfacht werden. Zudem kann eine Trennfolie einerseits zum Schutz der Blechteile, vorzugsweise als Kantenschutz, dienen und andererseits die Kurzschlusssicherheit von elektrischen Wicklungen bzw. Spulen am Blechpaket verbessern. Wird bevorzugt ein Klebeetikett auflaminiert, können bekannte Verfahren zum Aufspenden von Klebeetiketten verwendet werden, was Einfachheit und Reproduzierbarkeit des Verfahrens weiter erhöhen kann. Im Allgemeinen wird erwähnt, dass sich insbesondere ein selbstklebendes Klebeetikett mit einer Antihaft-Beschichtung für das Verfahren eignen kann.

Wird die Trennfolie auf der, dem Stempel der Abtrenneinrichtung abgewandten Blechbandseite auflaminiert, kann diese Trennfolie einen eventuellen Stanzgrat verdecken und damit eine Gratfreiheit des Blechpakets sicherstellen.

Wird die Trennfolie mithilfe eines Walzenauftragsverfahrens auf die Klebstoffschicht aufgebracht, so können - verfahrenstechnisch einfach - Endlosrollen der Trennfolie, insbesondere der Klebeetiketten, verwendet werden. Dadurch können ein kontinuierliches Auflaminieren ermöglicht und kurze Taktzeiten beim Abtrennen von Blechteilen gewährleistet werden.

Wird als Trennmittel eine Trennflüssigkeit auf die Klebstoffschicht aufgebracht und vor der Abtrenneinrichtung getrocknet, kann ein zum Auflaminieren einer Trennfolie alternatives Verfahren zur Trennbeschichtung des Blechbands geschaffen werden.

Insbesondere durch den Trocknungsschritt kann vermieden werden, dass die Trennflüssigkeit unvorteilhaft verrinnt und in unerwünschte Bereiche der Klebstoffschicht vordringt. Außerdem kann damit vermieden werden, dass die Schneiden bzw. Stanzen der Abtrenneinrichtung nicht mit der Trennflüssigkeit kontaminiert werden. Eine besonders wirksame Beschichtung zum Trennen von Blechpaketen kann erzeugt werden, wenn eine Polytetrafluorethylen (PTFE) enthaltende Trennflüssigkeit auf die Klebstoffschicht aufgebracht wird, da PTFE besonders ausgezeichnete Anti-Haft Eigenschaften und Gleiteigenschaften aufweist. Im Allgemeinen wird festgehalten, dass die Trocknung der Trennflüssigkeit durch die Zufuhr von Wärme erfolgen kann. Dies kann direkt oder indirekt erfolgen, beispielsweise mittels Heißluft, Infrarotstrahlung, induktive Erwärmung oder mit einem beheizten Werkzeug der Abtrenneinrichtung.

Auf verfahrenstechnisch einfache Weise kann die Trennflüssigkeit durch ein Sprüh-oder Druckverfahren aufgebracht werden. Beim Sprühen kann beispielsweise eine Schablone verwendet werden, um den Beschichtungsbereich des Trennmittels festzulegen. Im Allgemeinen wird festgehalten, dass alle gängigen Druckverfahren, insbesondere Tampon-Druck, Tiefdruck oder Siebdruck, verwendet werden können, um die Trennflüssigkeit auf die Klebstoffschicht aufzubringen.

Das Blechband kann für ein erleichtertes Endabtrennen der Blechteile vorbereitet werden, wenn die Abtrenneinrichtung erfindungsgemäß Teile vom Blechband vor-abtrennt und dann das Blechteil vom Blechband end-abtrennt. Im Allgemeinen wird außerdem festgehalten, dass die Abtrenneinrichtung neben einem Vorabtrennen und einem Endabtrennen auch beliebig viele weitere Abtrennschritte aufweisen kann.

Die Erfindung hat sich außerdem die Aufgabe gestellt, eine Vorrichtung zum Verbinden von Blechteilen zu einem Blechpaket zu schaffen, die konstruktiv einfach ausgebildet zuverlässig voneinander trennbare Blechpakete mit hoher Formgenauigkeit herstellen kann.

Die Erfindung löst die gestellte Aufgabe durch die Merkmale des Anspruchs 10.

Ist die Beschichtungseinrichtung vor der Abtrenneinrichtung vorgesehen, kann sich damit nicht nur die Konstruktion der Vorrichtung vereinfachen, sondern es kann damit auch sichergestellt werden, dass das Trennmittel der Beschichtungseinrichtung die konstruktiven Breitenabmessungen des Blechteils bzw. damit des Blechpakets nicht nachteilig beeinflussen kann. Die Trennbeschichtung wird nämlich durch die Abtrenneinrichtung entsprechend dem abzutrennenden Blechteil mitgetrennt, was ein stirnseitiges Überstehen der Trennbeschichtung vermeiden kann. Erfindungsgemäß kann damit ein formgenaues Blechpaket ermöglicht werden.

Die Formgenauigkeit des abgetrennten Blechteils bzw. der Blechpakete kann erhöht werden, wenn die Abtrenneinrichtung erfindungsgemäß mehrere Schneiden zum Vorabtrennen und Endabtrennen am Blechband aufweist. Zudem können mehrere Trennschritte prozessunterstützend hinsichtlich einer Schonung der Werkzeuge wirken, was die Standfestigkeit der Vorrichtung als auch die Maßhaltigkeit des Blechpakets erhöhen kann.

Eine vollflächige Abdeckung der Klebstoffbeschichtung mit der Trennbeschichtung kann gewährleistet werden, wenn die Trennbeschichtung der Kontur des abzutrennenden Blechteils vorsteht.

Weist die Beschichtungseinrichtung einen Etikettenspender zum Aufspenden von Klebeetiketten als Trennmittel auf das Blechband auf, kann die Konstruktion der Vorrichtung weiter vereinfacht werden. Außerdem können derartige Etikettenspender ein kontinuierliches Verfahren gewährleisten und durch deren Zuverlässigkeit die Standfestigkeit der Vorrichtung erhöhen. Im Allgemeinen wird erwähnt, dass sich insbesondere ein selbstklebendes Klebeetikett mit einer Antihaft-Beschichtung als Trennmittel bzw. Trennbeschichtung eignen kann.

Alternativ zur Klebeetikette ist vorstellbar, dass die Beschichtungseinrichtung mindestens eine Sprühdüse zum Aufsprühen oder mindestens eine Beschichtungswalze zum Ducken einer Trennflüssigkeit aufweist, um damit zuverlässig das Blechband mit einer Trennbeschichtung zu versehen. Im Allgemeinen ist hierzu vorstellbar, dass es auch denkbar ist, die Flüssigkeit in Gasform zu bringen und durch einen Abscheideprozess auf das Blechband aufzubringen.

In den Figuren ist beispielsweise der Erfindungsgegenstand anhand eines Ausführungsbeispiels näher dargestellt. Es zeigen
- Fig. 1: eine schematische Seitenansicht auf eine Vorrichtung zum Verbinden von Blechteilen zu einem Blechpaket,
- Fig. 2: eine teilweise Draufsicht auf die Vorrichtung nach Fig. 1,
- Fig. 3: eine vergrößerte Teilansicht auf Blechpakete in der Paketbremse der Vorrichtung nach Fig. 1,
- Fig. 4: eine vergrößerte Teilansicht auf den Bereich der Paketbremse der Vorrichtung nach Fig. 1 unter deren Verarbeitung eines beidseitig klebstoffbeschichteten Blechbands,
- Fig. 5: eine zur Fig. 4 andere Teilansicht auf den Bereich der Paketbremse der Vorrichtung nach Fig. 1 unter deren Verarbeitung eines einseitig klebstoffbeschichteten Blechbands und
- Fig. 6 und 7: verschiedenste alternative schematische Darstellungen zum Auftragen eines Trennmittels.

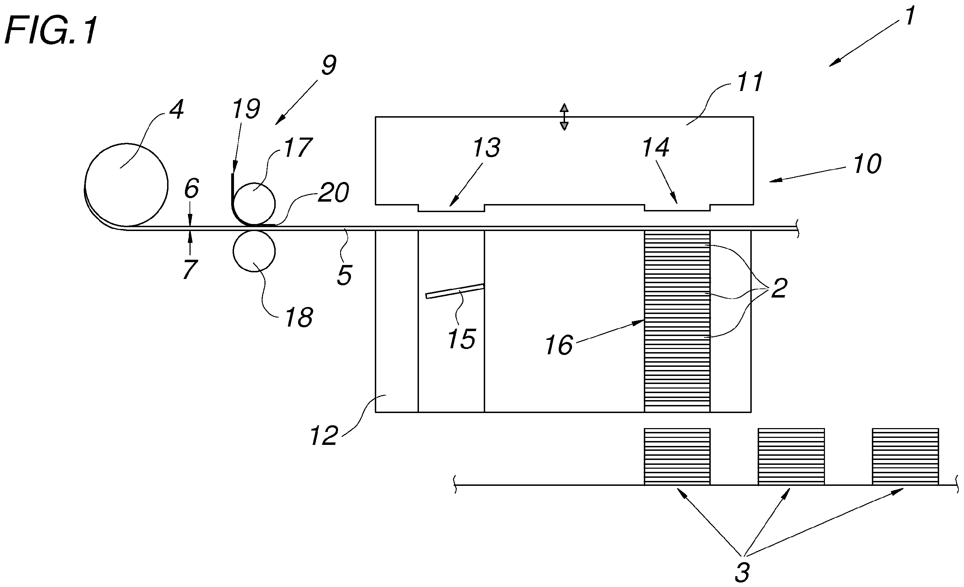

Gemäß dem Ausführungsbeispiel in Fig. 1 wird eine Vorrichtung 1 beispielsweise gezeigt, mit der das erfindungsgemäße Verfahren zum Verbinden von Blechteilen 2 zu einem Blechpaket 3 durchgeführt wird. Hierzu wird von einem Coil 4 ein Blechband 5 abgehaspelt, welches auf einer oder beiden Bandseiten 6, 7 eine vollflächige polymeren Klebstoffschicht 8, vorzugsweise einen Backlack, aufweist. Von diesem Blechband 5 werden mithilfe einer Abtrenneinrichtung 10 mehrere Blechteile 2 abgetrennt, wofür der Abtrenneinrichtung 10 ein Oberwerkzeug 11 und ein Unterwerkzeug 12 zugehören.

Solch ein Abtrennten der Abtrenneinrichtung 10 kann im Allgemeinen erwähnt ein Stanzen bzw. Ausschneiden, Abschneiden, Ausklinken, Beschneiden, Zerteilen durch Ausdrücken etc. darstellen.

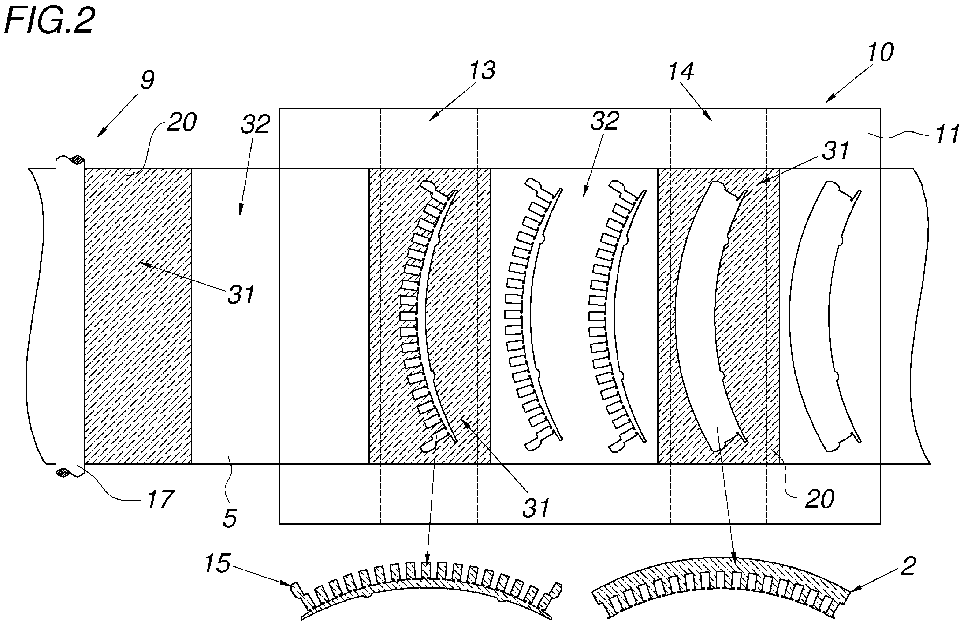

Wie außerdem in der Fig. 1 zu entnehmen ist, unterteilt sich die Abtrenneinrichtung 10 hierbei in ein Vorabtrennen mit einer Schneide 13 und ein Endabtrennen mit einer Schneide 14 des Oberwerkzeugs 11, welche Schneiden 13, 14 je mit nicht näher bezeichneten Matrizen zusammenwirken. Beim Vorabtrennen 13 werden nicht benötigte Teile 15 bzw. Schneidreste vom Blechband 5 entfernt, um das Blechband 5 für ein Endabtrennen des Blechteils 2 vorzubereiten, wie dies auch in der Fig. 2 näher erkannt werden kann. Beim Endabtrennen 14 werden die Blechteile 2 ausgeschnitten und durch Druck des Oberwerkzeugs 11 in eine sich teilweise verjüngende Führung im Unterwerkzeug 12 gedrängt, die eine Wirkung einer Paketbremse 16 auf das Blechpaket ausübt und damit die Blechteile 2 zu Blechpaketen 3 verbindet. Im Allgemeinen wird erwähnt, dass alternativ zu dieser Verjüngung auch ein Gegenhalter in der Führung vorstellbar ist, der einen entsprechenden Gegendruck zum Verbinden der Blechteile 2 ausübt, was nicht näher dargestellt worden ist. In der Paketbremse 16 gehen dabei die abgetrennten Blechteile 2 unter dem Druck des Oberwerkzeugs 11 und mithilfe der zwischen den Blechteilen vorhandenen polymeren Klebstoffschicht 8 eine feste physikalische und/oder chemische Verbindung ein. Im Allgemeinen wird erwähnt, dass die Paketbremse 16 auch aktiv beheizt werden kann, um die stoffschlüssige Verbindung der Blechteile 2 zu verbessern. Außerdem können die Blechpakete 3 nicht näher dargestellte weitere Aushärtungsschritte unterworfen werden, um die stoffschlüssige Verbindung zwischen den Blechteilen zu stärken. Nicht näher dargestellt ist außerdem, ist die Möglichkeit, einer Drehung der Paketbremse 16, um beispielsweise segmentierte Blechpaket 3 aus Lagen mit mehreren nebeneinander angeordneten Blechteilen 2 auszubilden.

Um die nun die Paketbremse 16 verlassenden Blechpakete 3 leichter voneinander trennen zu können, wird auf vordefinierte Blechteile 2 mit einer Beschichtungseinrichtung 9 ein Trennmittel 18 aufgebracht. Hierfür weist die Beschichtungseinrichtung 9 zwei Beschichtungswalzen 17, 18 auf, die je auf eine Bandseite 6, 7 des Blechbands 5 wirken. Mithilfe dieser Beschichtungswalzen 17, 18 wird ein Trennmittel 19 bereichsweise auf das Blechband 5 aufgebracht, um auf diesem abschnittsweise eine Trennbeschichtung 20 auszubilden.

Erfindungsgemäß ist diese Beschichtungseinrichtung 9 vor der Abtrenneinrichtung 10 vorgesehen. Diese erhöht die Reproduzierbarkeit des Verfahrens und vereinfacht die Konstruktion der Vorrichtung 1, wie dies anhand der Fig. 2 näher erläutert wird.

Entsprechend dieser Figur 2 wird in einem ersten Schritt mithilfe der Beschichtungswalze 17 eine Trennbeschichtung 20 auf das Blechband 5 höchstens bereichsweise aufgebracht. Damit wird die Trennbeschichtung 20 stets auf jene gewünschten Bereiche 31 sicher beschränkt, die einem auszustanzenden Blechteil 2 zugehörig sind, das trennbeschichtet werden soll und damit das Trennen der Blechpakete 3 erleichtert. Andere Bereiche 32 des Blechbands 5 bleiben frei von der Trennbeschichtung 20, um das Verbinden der Blechteile 2 zu einem Blechpaket 3 nicht zu gefährden. Das teilweise trennbeschichtete Blechband 5 läuft dann der Abtrenneinrichtung 10 zu. Dort wird mit einem Vorabtrennen mit einer Schneide 13 ein nicht benötigtes Teil 15 bzw. Schneidrest ausgestanzt bzw. ausgeschnitten, um das Blechband 5 auf das Endabtrennen vorzubereiten. Das Vorabtrennen kann auch mehrere Trennschritte aufweisen, was in den Figuren nicht näher dargestellt ist. Beim Endabtrennen mit einer Schneide 14 wird dann das gewünschte Blechteil 2 aus dem Blechband 5 abgetrennt, was in Fig. 2 dargestellt ein Segment einer Lage des Blechpakets 3 bildet und mit einer Trennbeschichtung 20 vollständig abgedeckt ist.

Es ist auch denkbar, dass beim Endabtrennen die Blechteile 2 lediglich aus dem Blechband 5 gedrückt werden, in dem das Oberwerkzeug 11 für das Endabtrennen keine Schneide 14 sondern ein nicht näher dargestelltes Drückerwerkzeug aufweist. Das Schneiden des Blechteils 2 kann vor diesem Drückerwerkzeug in einem Vorabtrennen erfolgen, wobei das Blechteil 2 in das Blechband 5 zurückgedrängt und dann endgültig durch das Drückerwerkzeug vom Blechband 5 abgetrennt wird.

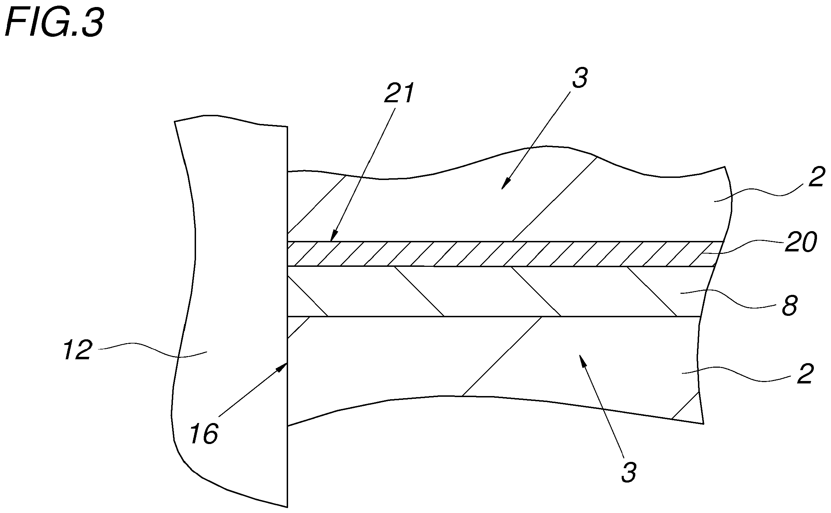

Entsprechend Fig. 3 wird ein exemplarischer Lagenaufbau von zu einem Blechpaket 3 verbundenen Blechteilen 2 in der Paketbremse 16 gezeigt. Damit die Blechpakete 3 sich in der Paketbremse 16 nicht in ähnlicher Weise - wie die Blechteile 2 der jeweiligen Blechpakete 3 - unter Druck verbinden, ist zwischen zwei Blechpaketen 3 eine Trennbeschichtung 20 vorgesehen. Diese Trennbeschichtung 20 wurde dabei auf die polymere Klebstoffschicht 8 des obersten Blechteils 2 des Blechpakets 3 aufgebracht, das sich in dieser Figur 3 unter dem anderen Blechpaket 3 befindet. Dies erleichtert die Trennung der hier dargestellten Blechpakete 3, wenn diese die Paketbremse 16 verlassen.

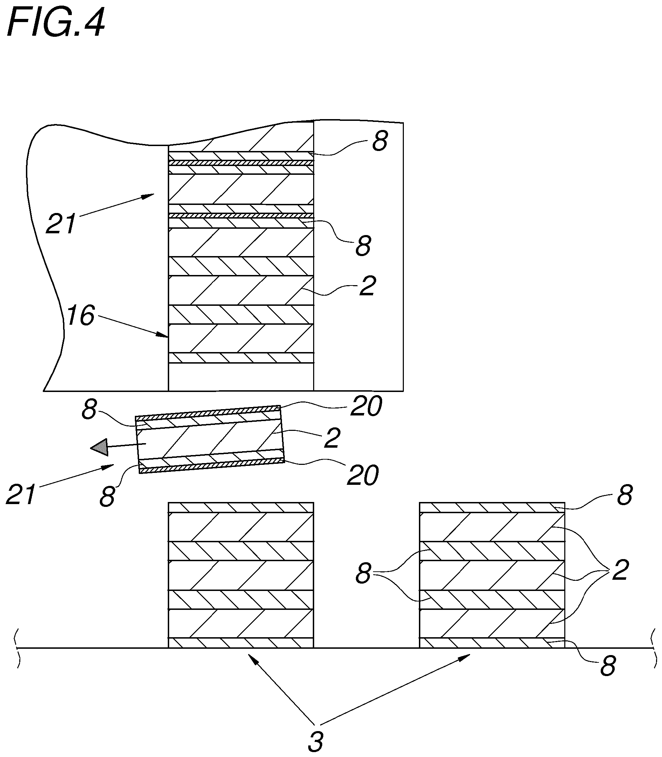

Zum Unterschied zur Fig. 3, bei dem ein Blechpaket 3 mit einer einseitigen Klebstoffbeschichtung 20 verarbeitet wird, wird in Fig. 4 die Verarbeitung eines beidseitig klebstoffbeschichteten Blechbands 5 näher dargestellt. Das erleichterte Trennen der Blechpakete 3 wird hier von einem beidseitig trennbeschichteten Blechteil 2 ermöglicht, dessen Klebstoffbeschichtungen 8 je mit einer Trennbeschichtung 20 abgedeckt werden. Das Blechteil 2 ist so hin nicht Teil eines Blechpakets 3 und wird nach dem Trennen der Blechpakete 3 von diesen als Trennblechteil 21 entfernt. Die so voneinander getrennten Blechpakete 3 sind demnach vorteilhafterweise frei von Rückständen der Trennbeschichtung. Ein Trennblechteil 21 kann auch bei einem einseitig beschichteten Blechteil 2 ermöglicht werden, wobei in diesem Fall eine Trennschicht 20 direkt an das Blechteil 2 anschließt.

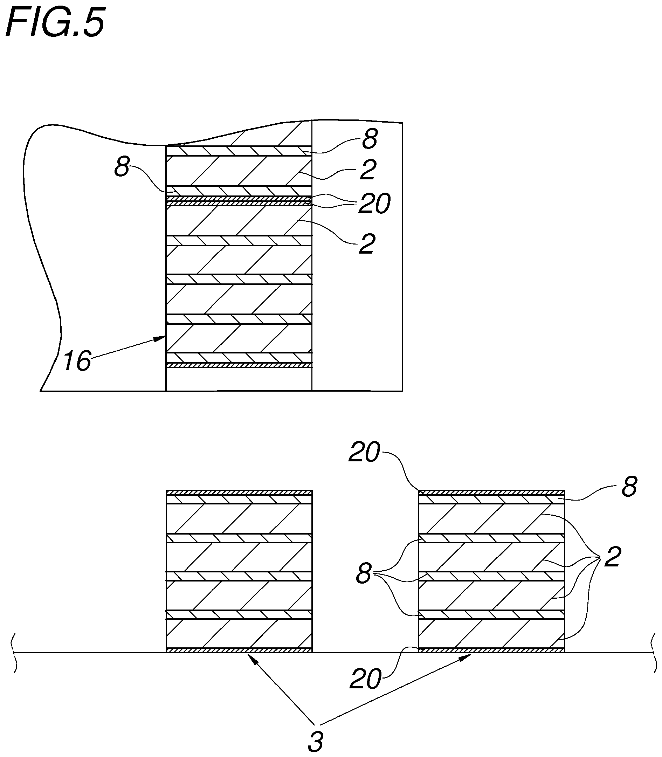

Gemäß der Fig. 5 ist das Ergebnis eines Auftragverfahrens gezeigt, bei dem auf beiden Seiten 6, 7 des Blechbands 5 abwechselnd je ein Trennmittel 19 aufgebracht wird. Auf beiden Paketenden des Blechpakets 3 findet sich damit eine Trennbeschichtung 20. Diese Trennbeschichtung 20 dient hierbei zum Schutz oder der Weiterverarbeitung der Blechpakete 3.

Bei den nach den Figuren 1, 3, 4 und 5 abgetrennten Blechteilen 2 sind die Trennbeschichtungen 20 jeweils vollflächig auf die polymeren Klebstoffschichten 8 aufgebracht, was zu einer besonders einfachen Trennung der Blechpakete 3 führt. Dafür kann zuerst die Trennbeschichtung 20 derart auf eine oder beide polymere Klebstoffschichten 20 des Blechbands 5 aufgebracht werden, dass beim Endabtrennen 14 ein vollflächig mit Trennmittel 19 beschichtetes Blechteil 2 abgetrennt wird. Dies wird gemäß Fig. 2 durch einen Überstand der Trennbeschichtung 20 über die Kontur des endabzutrennenden Blechteils 2 ermöglicht, um zu gewährleisten, dass bei etwaigen Fertigungstoleranzen eine durchgängige, vollflächige Trennbeschichtung 20 auf den Blechteilen 2 sichergestellt ist.

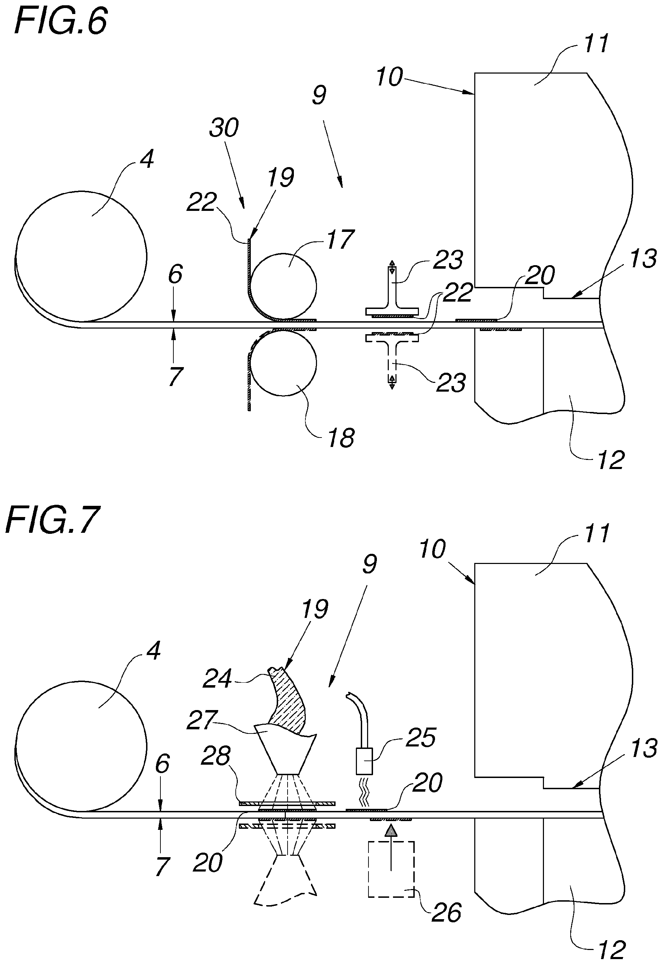

In den Figuren 6 und 7 wird nun weiter auf das Auftragsverfahren des Trennmittels 19 näher eingegangen, was vorausblickend auf die gewünschte Trennung der Blechpakete 3 auf das Blechband 5 aufgebracht wird.

Gemäß Fig. 6 wird gezeigt, wie die Beschichtungseinrichtung 9 als Trennmittel 19 eine Trennfolie 22, insbesondere in Form eines Klebeetiketts 22 verwendet. Vorzugsweise werden selbstklebende Klebeetiketten 22 mit einer Antihaft-Beschichtung verwendet. Die Klebeetiketten 22 werden dabei einseitig oder beidseitig auf das beschichtete Blechband 5 auflaminiert und bilden damit die Trennbeschichtung 20 aus. Diese steht wie bereits erwähnt der Kontur des endabzutrennenden Blechteils 2 vor. Das Aufbringen eines Klebeetiketts 22 kann beispielsweise mithilfe bekannter Verfahren zum Aufspenden erfolgen, was kurze Taktzeiten ermöglicht. In Fig. 6 dargestellt, werden die Klebeetiketten 22 mithilfe eines teilweise dargestellten Etikettenspenders 30 auf die polymere Klebstoffschicht 8 einer oder beider Bandseiten 6, 7 auflaminiert. Bei Verwendung eines Walzenauftragsverfahrens können Endlos-Trennfolien 22 auf Rollen zum Einsatz kommen. Alternativ zur Auflaminierung der Klebeetiketten 22 mit Beschichtungswalzen 17, 18 können diese Klebeetiketten 22 auch mit vertikal beweglichen Laminierstempeln 23 auflaminiert werden. Dadurch ist insbesondere eine vollflächige Auflaminierung von Klebeetiketten 22 in einem Schritt auf das Blechband 5 möglich.

Gemäß Fig. 7 wird beim Auftragsverfahren der Beschichtungseinrichtung 9 als Trennmittel 19 eine Trennflüssigkeit 24 verwendet. Insbesondere kann hier als Trennflüssigkeit 24 eine Polytetrafluorethylen (PTFE) aufweisende Dispersion dienen. Die PTFE-Partikel können dabei maßgeblich die Anti-Haft Eigenschaft der Trennflüssigkeit 24 verbessern. Zur Ausbildung der Trennbeschichtung 20 wird die Trennflüssigkeit 24 nach dem Aufbringen auf eine oder mehrere polymere Klebstoffschichten getrocknet. Dazu kommen wahlweise ein Heißlufttrockner 25 oder andere Trockenverfahren 26 durch Erhitzung des Blechbands 5 zum Einsatz. Beispielsweise kann das Blechband 5 mit einer Induktionsheizung 26 direkt erhitzt werden und dadurch die Trennflüssigkeit 24 zur Ausbildung der Trennbeschichtung 20 getrocknet werden. Wie in Fig. 7 weiter zu erkennen, wird mithilfe einer Sprühdüse 27 die Trennflüssigkeit 24 durch eine Schablone 28 auf das Blechband 5 gesprüht. Die Schablone dient dabei dem gezielten Auftrag von Trennflüssigkeit 24 in den gewünschten Bereichen. Neben dem Auftrag über eine Sprühdüse kann die Trennflüssigkeit 24 auch mithilfe jedes gängigen Druckverfahrens, wie etwa Tampon-druck, Tiefdruck oder Siebdruck, erfolgen, was in der Fig. 7 nicht näher dargestellt worden ist.

## Patentansprüche

1. Verfahren zum Verbinden von Blechteilen (2) zu einem Blechpaket (3), bei dem Blechteile (2) von einem Blechband (5), insbesondere Elektroband, mit einer wenigstens bereichsweisen, aushärtbaren, polymeren Klebstoffschicht (8), insbesondere Backlack, mithilfe einer Abtrenneinrichtung (10) abgetrennt werden, wobei die Abtrenneinrichtung (10) Teile (15) vom Blechband (5) vor-abtrennt und das Blechteil (2) vom Blechband (5) end-abtrennt, welche abgetrennten Blechteile (2) in einer Paketbremse (16) übereinander vorgesehen zu mehreren Blechpaketen (3) zumindest stoffschlüssig verbunden werden, bei welchem Verfahren auf wenigstens eine Klebstoffschicht (8) des Blechbands (5) ein Trennmittel (19) bereichsweise derart aufgebracht wird, dass nach dem Abtrennen eines damit trennbeschichteten Blechteils (2), dieses Blechteil (2) die Trennung der Blechpakete (3) erleichtert, **dadurch gekennzeichnet, dass** das Trennmittel (19) auf die Klebstoffschicht (8) des Blechbands (5) vor der Abtrenneinrichtung (10) aufgebracht wird.

2. Verfahren nach Anspruch 1, **dadurch gekennzeichnet, dass** auf beiden Seiten (6, 7) des Blechbands (5) je ein Trennmittel (19) direkt gegenüberliegend aufgebracht wird.

3. Verfahren nach Anspruch 1, **dadurch gekennzeichnet, dass** auf beiden Seiten (6, 7) des Blechbands (5) abwechselnd je ein Trennmittel (19) aufgebracht wird.

4. Verfahren nach Anspruch 1, 2 oder 3, **dadurch gekennzeichnet, dass** die Trennbeschichtung (20) derart aufgebracht wird, dass die Trennbeschichtung (20) nach dem Endabtrennen (14) des Blechteils (2) die Klebstoffschicht (8) vollflächig abdeckt.

5. Verfahren nach einem der Ansprüche 1 bis 4, **dadurch gekennzeichnet, dass** als Trennmittel (19) eine Trennfolie (22), insbesondere ein Klebeetikett (22) mit insbesondere einer Antihaft-Beschichtung, auflaminiert wird.

6. Verfahren nach Anspruch 5, **dadurch gekennzeichnet, dass** die Trennfolie (22) auf der, dem Stempel der Abtrenneinrichtung (10) abgewandten Blechbandseite (6, 7) auflaminiert wird.

7. Verfahren nach Anspruch 5 oder 6, **dadurch gekennzeichnet, dass** die Trennfolie (22) mithilfe eines Walzenauftragsverfahrens (17, 18) auf die Klebstoffschicht (8, 9) aufgebracht wird.

8. Verfahren nach einem der Ansprüche 1 bis 4, **dadurch gekennzeichnet, dass** als Trennmittel (19) eine Trennflüssigkeit (24), insbesondere enthaltend Polytetrafluorethylen, auf die Klebstoffschicht (8) aufgebracht und vor der Abtrenneinrichtung (10) getrocknet wird.

9. Verfahren nach Anspruch 8, **dadurch gekennzeichnet, dass** die Trennflüssigkeit (24) durch ein Sprüh- oder Druckverfahren (27) aufgebracht wird.

10. Vorrichtung zum Verbinden von Blechteilen (2) zu einem Blechpaket (3) mit einem, wenigstens bereichsweise mit einer aushärtbaren, polymeren Klebstoffschicht (8), insbesondere Backlack, beschichten Blechband (5), insbesondere Elektroband, mit mindestens einer Abtrenneinrichtung (10) zum Abtrennen von Blechteilen (2) vom Blechband (5), wobei die Abtrenneinrichtung (10) mehrere Schneiden (13, 14) zum Vorabtrennen und Endabtrennen des Blechbands (5) aufweist, mit einer Paketbremse (16) zum zumindest stoffschlüssigen Verbinden der abgetrennten und übereinander vorgesehenen Blechteile (2) zu einem Blechpaket (3) und mit einer Beschichtungseinrichtung (9), die auf wenigstens eine Klebstoffschicht (8) des Blechbands (5) ein Trennmittel (19) bereichsweise derart aufbringt, dass nach dem Abtrennen eines damit trennbeschichteten Blechteils (2), dieses Blechteil (2) die Trennung der Blechpakete (3) erleichtert, **dadurch gekennzeichnet, dass** für ein Aufbringen des Trennmittels (19) auf die Klebstoffschicht (8) des Blechbands (5) vor der Abtrenneinrichtung (10) die Beschichtungseinrichtung (9) vor der Abtrenneinrichtung (10) vorgesehen ist.

11. Vorrichtung nach Anspruch 10, **dadurch gekennzeichnet, dass** die Trennbeschichtung (20) der Kontur des abzutrennenden Blechteils (2) vorsteht.

12. Vorrichtung nach Anspruch 10 oder 11, **dadurch gekennzeichnet, dass** die Beschichtungseinrichtung (9) einen Etikettenspender (30) zum Aufspenden von Klebeetiketten (22) als Trennmittel (19) auf das Blechband (5) aufweist.

13. Vorrichtung nach Anspruch 10 oder 11, **dadurch gekennzeichnet, dass** die Beschichtungseinrichtung (9) mindestens eine Sprühdüse (27) zum Aufsprühen oder mindestens eine Beschichtungswalze (17, 18) zum Ducken einer Trennflüssigkeit (24) aufweist.

## Claims

1. Method for joining sheet-metal parts (2) to form a sheet-metal stack (3), in which sheet-metal parts (2) are separated from a sheet-metal strip (5), more particularly electrical strip, having a polymeric adhesive layer (8), more particularly baking lacquer, which can be cured at least in certain regions, with the aid of a separating device (10), wherein the separating device (10) pre-separates parts (15) from the sheet-metal strip (5) and finally separates the sheet-metal part (2) from the sheet-metal strip (5), which separated sheet-metal parts (2), provided one on top of the other in a stack brake (16), are joined at least in a materially bonded manner to form a plurality of sheet-metal stacks (3), in which method a separating agent (19) is applied regionally to at least one adhesive layer (8) of the sheet-metal strip (5) in such a manner that after the separation of a sheet-metal part (2) coated therewith, this sheet-metal part (2) facilitates the separation of the sheet-metal stacks (3), **characterized in that** the separating agent (19) is applied to the adhesive layer (8) of the sheet-metal strip (5) before the separating device (10).

2. Method according to claim 1, **characterized in that** one separating agent (19) each is applied directly opposite each other on both sides (6, 7) of the sheet-metal strip (5).

3. Method according to claim 1, **characterized in that** one separating agent (19) each is applied alternately to both sides (6, 7) of the sheet-metal strip (5).

4. Method according to claim 1, 2 or 3, **characterized in that** the release coating (20) is applied in such a way that the separating coating (20) covers the entire surface of the adhesive layer (8) after the final separation (14) of the sheet-metal part (2).

5. Method according to one of claims 1 to 4, **characterized in that** a separating film (22), more particularly an adhesive label (22) with, more particularly, a non-stick coating, is laminated on as the separating agent (19).

6. Method according to claim 5, **characterized in that** the separating film (22) is laminated onto the side of the sheet-metal strip (6, 7) facing away from the punch of the separating device (10).

7. Method according to claim 5 or 6, **characterized in that** the separating film (22) is applied to the adhesive layer (8, 9) by means of a roller application process (17, 18).

8. Method according to one of claims 1 to 4, **characterized in that** a separating liquid (24), more particularly containing polytetrafluoroethylene, is applied to the adhesive layer (8) as the separating agent (19) and dried before the separating device (10).

9. Method according to claim 8, **characterized in that** the separating liquid (24) is applied by a spraying or printing process (27).

10. Device for joining sheet-metal parts (2) to form a sheet-metal stack (3) having a sheet-metal strip (5), more particularly electrical strip, coated at least in regions with a curable polymeric adhesive layer (8), more particularly baking lacquer, having at least one separating device (10) for separating sheet-metal parts (2) from the sheet-metal strip (5), wherein the separating device (10) has a plurality of cutting edges (13, 14) for preliminary separation and final separation of the sheet-metal strip (5), having a stack brake (16) for joining in an at least materially bonded manner the separated sheet-metal parts (2) provided one above the other to form a sheet metal stack (3), and having a coating device (9) which applies a separating agent (19) to at least one adhesive layer (8) of the sheet-metal strip (5) in regions in such a way that, after a sheet-metal part (2) coated with separating agent has been separated, this sheet-metal part (2) facilitates the separation of the sheet-metal stacks (3), **characterized in that** the coating device (9) is provided upstream of the separating device (10) for applying the separating agent (19) to the adhesive layer (8) of the sheet-metal strip (5) upstream of the separating device (10).

11. Device according to claim 10, **characterized in that** the separating coating (20) protrudes from the contour of the sheet-metal part (2) to be separated.

12. Device according to claim 10 or 11, **characterized in that** the coating device (9) has a label dispenser (30) for dispensing adhesive labels (22) as a separating agent (19) onto the sheet-metal strip (5).

13. Device according to claim 10 or 11, **characterized in that** the coating device (9) comprises at least one spray nozzle (27) for spraying or at least one coating roller (17, 18) for printing a separating liquid (24).

## Revendications

1. Procédé pour l'assemblage de pièces de tôle (2) en paquets de tôles (3), dans lequel des pièces de tôle (2) sont découpées dans un feuillard de tôle (5), en particulier un feuillard magnétique, avec au moins par zones une couche d'adhésif (8) polymère durcissable, en particulier de vernis thermodurcissable, au moyen d'un dispositif de découpe (10), lequel dispositif de découpe (10) prédécoupe des pièces (15) du feuillard de tôle (5) et finit la découpe de la pièce de tôle (2) du feuillard de tôle (5), les pièces de tôle (2) découpées étant superposées dans une pile de freinage des paquets (16) et assemblés au moins par solidarité de matière pour former plusieurs paquets de tôles (3), procédé dans lequel un agent de séparation (19) est appliqué par zones sur au moins une couche d'adhésif (8) du feuillard de tôle (5) de telle manière qu'après la découpe d'une pièce de tôle (2) ainsi munie du revêtement de séparation, cette pièce de tôle (2) facilite la séparation des paquets de tôles (3), **caractérisé en ce que** l'agent de séparation (19) est appliqué sur la couche d'adhésif (8) du feuillard de tôle (5) avant le dispositif de découpe (10).

2. Procédé selon la revendication 1, **caractérisé en ce qu'**un agent de séparation (19) est appliqué sur chacun des deux côtés (6, 7) du feuillard de tôle (5) en position directement opposée.

3. Procédé selon la revendication 1, **caractérisé en ce qu'**un agent de séparation (19) est appliqué alternativement sur chacun des deux côtés (6, 7) du feuillard de tôle (5).

4. Procédé selon la revendication 1, 2 ou 3, **caractérisé en ce que** le revêtement de séparation (20) est appliqué de telle façon que le revêtement de séparation (20) recouvre complètement la couche d'adhésif (8) après la découpe finale (14) de la pièce de tôle (2).

5. Procédé selon l'une des revendications 1 à 4, **caractérisé en ce que** l'agent de séparation (19) utilisé est un film de séparation (22), en particulier une étiquette adhésive (22) munie en particulier d'un revêtement antiadhésif, appliqué par stratification.

6. Procédé selon la revendication 5, **caractérisé en ce que** le film de séparation (22) est stratifié sur le côté du feuillard de tôle (6, 7) tourné à l'opposé du poinçon du dispositif de découpe (10).

7. Procédé selon la revendication 5 ou 6, **caractérisé en ce que** le film de séparation (22) est appliqué à l'aide d'un procédé d'application par rouleaux (17, 18) sur la couche d'adhésif (8, 9).

8. Procédé selon l'une des revendications 1 à 4, **caractérisé en ce que** l'agent de séparation (19) utilisé est un liquide de séparation (24), contenant en particulier du polytétrafluoroéthylène, appliqué sur la couche d'adhésif (8) et séché avant le dispositif de découpe (10).

9. Procédé selon la revendication 8, **caractérisé en ce que** le liquide de séparation (24) est appliqué par un procédé de pulvérisation ou d'impression (27).

10. Dispositif pour l'assemblage de pièces de tôle (2) en un paquet de tôles (3) avec un feuillard de tôle (5), en particulier un feuillard magnétique, revêtu au moins par zones d'une couche d'adhésif (8) polymère durcissable, en particulier de vernis thermodurcissable, avec au moins un dispositif de découpe (10) pour détacher des pièces de tôle (2) du feuillard de tôle (5), lequel dispositif de découpe (10) présente plusieurs lames (13, 14) pour la prédécoupe et la découpe finale du feuillard de tôle (5), avec une pile de freinage des paquets (16) pour l'assemblage au moins par solidarité de matière des pièces de tôle (2) détachées et superposées pour former un paquet de tôles (3) et avec un dispositif de revêtement (9) qui applique par zones sur au moins une couche d'adhésif (8) du feuillard (5) un agent de séparation (19), de telle façon qu'après la découpe d'une pièce de tôle (2) ainsi munie du revêtement de séparation, cette pièce de tôle (2) facilite la séparation des paquets de tôles (3), **caractérisé en ce que** le dispositif de revêtement (9) est prévu avant le dispositif de découpe (10) pour appliquer l'agent de séparation (19) sur la couche d'adhésif (8) du feuillard de tôle (5) avant le dispositif de découpe (10).

11. Dispositif selon la revendication 10, **caractérisé en ce que** le revêtement de séparation (20) dépasse du contour de la pièce de tôle (2) à découper.

12. Dispositif selon la revendication 10 ou 11, **caractérisé en ce que** le dispositif de revêtement (9) comprend un distributeur d'étiquettes (30) pour distribuer des étiquettes adhésives (22) servant d'agent de séparation (19) sur le feuillard de tôle (5).

13. Dispositif selon la revendication 10 ou 11, **caractérisé en ce que** le dispositif de revêtement (9) comprend au moins une buse de pulvérisation (27) pour pulvériser un liquide de séparation (24) ou au moins un rouleau de revêtement (17, 18) pour imprimer avec celui-ci.
